# FASCICULE DE BREVET EUROPEEN

(11) **EP 0 516 526 B1**
(45) Date de publication et mention de la délivrance du brevet: **02.11.1995**
(21) Numéro de dépôt: 92401431.9
(22) Date de dépôt: 26.05.1992
(51) Int. Cl.: B60J 10/08

(54) **Dispositif d'étanchéité pour élément ouvrant de véhicule automobiles**
Dichtungsvorrichtung für ein Öffnungselement eines Kraftfahrzeugs
Sealing arrangement for opening part of motor vehicle

(30) Priorité: 30.05.1991 FR 9106833
(43) Date de publication de la demande: 02.12.1992
(73) Titulaire: AUTOMOBILES PEUGEOT, 75116 Paris (FR); AUTOMOBILES CITROEN, 92200 Neuilly-sur-Seine (FR)
(72) Inventeur: Buisson, Daniel, F-91220 Bretigny S/Orge (FR)
(74) Mandataire: Boivin, Claude

(56) Documents cités:
- WO-A-88/09594
- FR-A- 1 204 975
- FR-A- 2 227 783

## Description

Les véhicules automobiles sont en général munis, au droit de leurs éléments ouvrants tels que les portes, de joints qui assurent l'étanchéité et améliorent l'acoustique de l'habitacle. Il arrive qu'en période de gel ces joints restent collés aux éléments ouvrants s'ils étaient plus ou moins humides; il est alors impossible d'ouvrir l'élément ouvrant sans détériorer le joint.

Le document WO-A- 88/ 09 594 décrit un dispositif de chauffage d'un élément de véhicule automobile, tel que le récipient contenant l'eau du lave-glace ou le balai d'essuie-glace ou un joint de porte.

Le document FR-A- 2 227 783 décrit un joint d'étanchéité pour l'élément ouvrant de véhicule automobile comprenant une partie tubulaire souple d'étanchéité et une partie profilée en U destinée à être fixée sur un élément de la carrosserie du véhicule.

Le document FR-A- 1 204 975 (Voir notamment page 2, ligne 47 à page 3, ligne 7) décrit un balai d'essuie-glace dans un alésage duquel est disposé un élément de résistance en boudin.

La présente invention a pour objet un joint d'étanchéité qui pallie l'inconvénient mentionné précédemment et est destiné aux véhicules comportant une commande centralisée.

L'objet de l'invention est un joint d'étanchéité pour élément ouvrant de véhicule automobile comportant une commande centralisée de verrouillage des portes, destinée à commander le chauffage du joint lors du déverrouillage des portes lorsque la température ambiante extérieure est faible, joint qui comprend une partie tubulaire souple d'étanchéité et une partie profilée en U destinée à être fixée sur un élément de la carrosserie, la partie tubulaire souple comportant, noyée dans sa masse, une résistance électrique souple pouvant être connectée à la batterie du véhicule et dont le circuit d'alimentation comporte des moyens d'interruption commandés par la commande centralisée. Ainsi, lorsque l'utilisateur assure le déverrouillage des portes, la résistance est en même temps mise sous tension, si les conditions climatiques l'exigent, ce qui évite la détérioration du joint lorsqu'on ouvre ensuite la porte.

Des caractéristiques ayant trait à un mode de réalisation de l'invention sont précisées dans les revendications 2 à 4 dépendantes.

On a décrit ci-après, à titre d'exemple non limitatif, un mode de réalisation du joint d'étanchéité selon l'invention, avec référence aux dessins annexés dans lesquels :
La Figure 1 est une vue en perspective du joint;
La Figure 2 en est une coupe transversale;

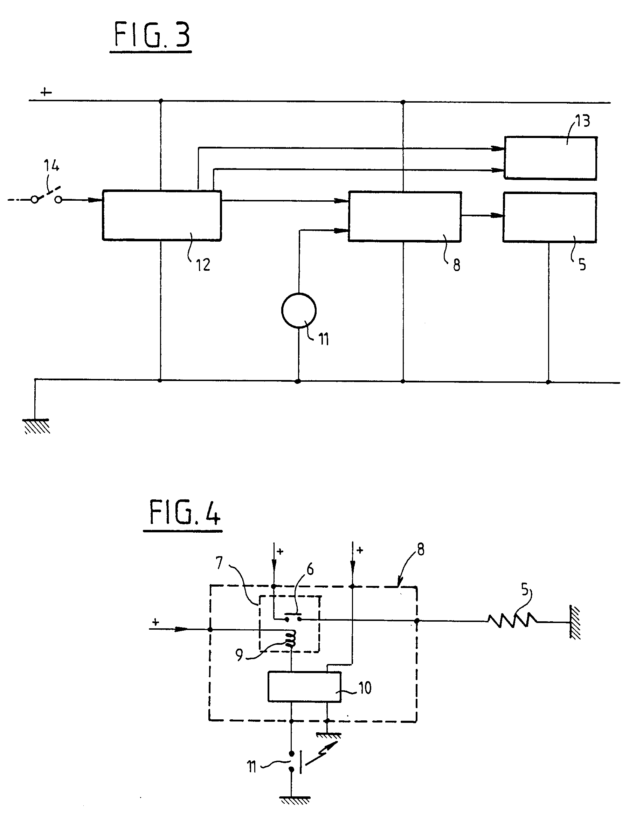

La Figure 3 montre le boîtier de commande et la résistance;
La Figure 4 est un schéma montrant la liaison de ce boîtier de commande avec la commande centralisée des portes.

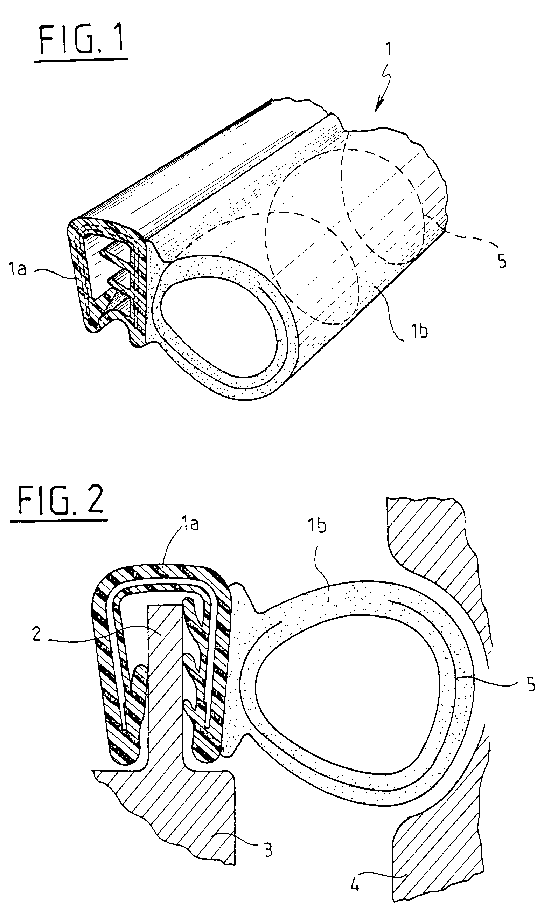

Aux Figures 1 et 2, on voit un joint d'étanchéité 1 pour porte de véhicule. ce joint comporte une partie 1a profilée en U, pouvant être emmanchée et collée sur une nervure 2 de la carrosserie 3 du véhicule, et une partie tubulaire 1b propre à assurer l'étanchéité entre cette carrosserie et une porte 4.

Une résistance de chauffage 5 est noyée dans la masse de la partie 1b du joint, sensiblement sur toute la longueur de ce joint; pour assurer un chauffage sur toute la périphérie du joint, la résistance 5 est hélicoïdale.

La résistance 5 est connectée à la masse et peut être connectée au pôle positif de la batterie par un contact 6 d'un relais 7 faisant partie d'un boîtier de commande 8. L'enroulement 9 du relais 7 est connecté à la masse par l'intermédiaire d'un temporisateur 10 et d'une sonde de température 11 fixée à l'extérieur de la carrosserie 3. Il peut être connecté au pôle positif de la batterie par le boîtier de condamnation centralisée 12, en même temps que les actionneurs de porte 13, lorsque ces actionneurs sont amenés en position de déverrouillage; ce boîtier comprend une commande à distance 14, par exemple à infra-rouge.

En supposant que la température extérieure soit faible, par exemple inférieure à 3° C, la sonde 11 est fermée. Dans ces conditions, lorsque l'utilisateur assure le déverrouillage des portes par l'intermédiaire du boîtier 12, en agissant sur la commande à distance 14, l'enroulement 9 est alimenté, le relais 7 se ferme et la résistance 5 est mise sous tension. La partie tubulaire 1b est chauffée et se dégivre, ce qui l'empêche de coller sur la porte 4. Au bout d'un certain temps, fonction du réglage du temporisateur 10, l'alimentation de la bobine 9 du relais 7 est coupée et la résistance 5 est mise hors service.

Si la température extérieure est plus élevée, la sonde 11 empêche la fermeture du relais 7, donc la mise en service de la résistance 5.

Il va de soi que la présente invention ne doit pas être considérée comme limitée au mode de réalisation décrit et représenté, mais en couvre, au contraire, toutes les variantes. C'est ainsi, par exemple, que le temporisateur 10 et/ou la sonde 11 pourraient être interposés directement sur le circuit d'alimentation de la résistance 5 en série avec le contact 6.

## Revendications

1. Joint d'étanchéité pour élément ouvrant de véhicule automobile comportant une commande centralisée (12) de verrouillage des portes, destinée à commander le chauffage du joint lors du déverrouillage des portes lorsque la température ambiante extérieure est faible, joint qui comprend une partie tubulaire souple d'étanchéité (1b) et une partie profilée en U (1a) destinée à être fixée sur un élément (2) de la carrosserie, la partie tubulaire souple (1b) comportant, noyée dans sa masse, une résistance électrique souple (5) pouvant être connectée à la batterie du véhicule et dont le circuit d'alimentation comporte des moyens d'interruption (6) commandés par la commande centralisée (12).

2. Joint d'étanchéité selon la revendication 1, caractérisé en ce que le fil (5) est disposé hélicoïdalement.

3. Joint d'étanchéité selon la revendication 1 ou 2,
caractérisé en ce qu'un temporisateur (10) est interposé sur le circuit d'alimentation de la résistance (5) ou sur son circuit de commande.

4. Joint d'étanchéité selon l'une des revendications 1 à 3,
caractérisé en ce qu'une sonde de température (11) est interposée sur le circuit d'alimentation de la résistance (5) ou sur son circuit de commande.

## Claims

1. Gasket for an opening element of a motor vehicle comprisng a centralized control (12) for locking the doors and intended to control the heating of the gasket during unlocking of the doors when the outer ambient temperature is low, said gasket including a flexible impervious tubular part (1b) and a U-shaped part (1a) intended to be secured to an element (2) of the body, the flexible tubular part (1b) comprising embedded in its mass a flexible electric resistor (5) able to be connected to the battery of the vehicle and whose feed circuit comprises disconnection means (6) controlled by the centralized control (12).

2. Gasket according to claim 1, wherein the wire (5) is disposed helically.

3. Gasket according to claim 1 or 2, wherein a retarder (10) is inserted on the circuit for feeding the resistor (5) or on its control circuit.

4. Gasket according to any one of claims 1 to 3, wherein a temperature probe (11) is inserted on the circuit for feeding the resistor (5) or on its control circuit.

## Patentansprüche

1. Dichtungseinrichtung für ein sich öffendes Element eines Kraftfahrzeugs, das eine Zentralsteuerung 12 für die Türverriegelung besitzt, die dazu bestimmt ist, die Heizung der Dichtung von der Entriegelung der Türen an anzusteuern, wenn die äußere Umgebungstemperatur niedrig ist, wobei die Dichtung einen rohrförmigen, weichen Dichtungsteil (1b) aufweist, sowie einen als U-Profil ausgebildeten Teil (1a), der dazu bestimmt ist, an einem Karosserieelement (2) befestigt zu werden, und der rohrförmige weiche Teil (1b) einen in seine Masse eingebetteten biegsamen elektrischen Widerstand (5) aufweist, der mit der Fahrzeugbatterie verbunden werden kann und dessen Speisestromkreis Unterbrechungsmittel (6) besitzt, die von der Zentralsteuerung (12) aus angesteuert werden.

2. Dichtungseinrichtung nach Anspruch 1, dadurch gekennzeichnet, daß der Draht (5) helixförmig angeordnet ist.

3. Dichtungseinrichtung nach Anspruch 1 oder 2, dadurch gekennzeichnet, daß in den Speisestromkreis des Widerstandes (5) oder seines Ansteuerkreises ein Verzögerungsglied (10) eingeschaltet ist.

4. Dichtungseinrichtung nach einem der Ansprüche 1 bis 3, dadurch gekennzeichnet, daß in den Speisestromkreis des Widerstandes (5) oder seines Ansteuerkreises ein Temperaturfühler (11) eingeschaltet ist.
